# FASCICULE DE BREVET EUROPEEN

(11) **EP 1 748 910 B1**
(45) Date de publication et mention de la délivrance du brevet: **14.09.2011**
(21) Numéro de dépôt: 05772909.7
(22) Date de dépôt: 20.05.2005
(51) Int. Cl.: B60J 7/19, B60J 7/14

(54) **SYSTEME DE VERROUILLAGE DE TOIT REPLIABLE EN PLUSIEURS ELEMENTS ET VEHICULE CORRESPONDANT**
SYSTEM ZUM VERRIEGELN EINES DACHS, DAS ZU MEHREREN ELEMENTEN GEFALTET WERDEN KANN, UND ENTSPRECHENDES FAHRZEUG
SYSTEM FOR LOCKING A ROOF WHICH CAN BE FOLDED INTO A PLURALITY OF ELEMENTS, AND CORRESPONDING VEHICLE

(30) Priorité: 25.05.2004 FR 0405621
(43) Date de publication de la demande: 07.02.2007
(73) Titulaire: HEULIEZ SAS, 79140 Cerizay (FR)
(72) Inventeur: QUEVEAU, Gérard, F-79140 Le Pin (FR); QUEVEAU, Paul, F-79140 Montravers (FR); GUILLEZ, Jean-Marc, F-79140 Cirieres (FR)
(74) Mandataire: Novagraaf Technologies
(86) Numéro de dépôt international: PCT/FR2005/001268
(87) Numéro de publication internationale: WO 2006/000672

(56) Documents cités:
- EP-A- 0 884 208
- DE-A- 10 249 640
- FR-A- 2 805 219
- US-A1- 2004 007 896
- US-A1- 2004 007 897
- US-A1- 2004 046 417
- US-B1- 6 585 310

## Description

L'invention concerne un toit comprenant plusieurs éléments repliables, pour un véhicule convertible, le véhicule en lui-même, le système de verrouillage des éléments de toit entre eux et certains au moins de ces éléments vis-à-vis du bâti structurel du véhicule dans les cas ouvert replié (rangé) du toit, ainsi que la manière de verrouiller de façon réversible le toit dans ses états fermé au dessus de l'habitacle du véhicule et ouvert, replié.

Plus précisément, un objet de l'invention est de simplifier et améliorer le verrouillage et/ou le centrage ou le calage du toit en position tant fermée qu'ouverte de ce toit, dans le cas d'un véhicule convertible, tel par exemple qu'un cabriolet. L'invention vise particulièrement le toit connu de FR-A-2805218, document sur lequel est basé le préambule de la revendication 1.

Un but de l'invention est également d'assurer un positionnement relatif précis des éléments de toit pour favoriser la continuité des lignes de carrosserie de ce toit et sa rigidité structurelle.

Pour aller dans le sens de la satisfaction de tout ou partie de ces objectifs, l'invention prévoit la réalisation d'un tel toit ou d'un système de verrouillage pour ce toit repliable dans le dit véhicule convertible, le toit comportant un élément avant rigide relié de façon articulé à un élément central arrière rigide présentant une extrémité arrière adaptée pour être relié de façon articulé à un bâti structurel du véhicule, lesdits éléments avant et central arrière de toit présentant une direction longitudinale et chacun un bord transversal avant et un bord transversal arrière qui sont longitudinalement opposés, lesdits éléments de toit avant et central arrière étant mobiles entre une première position relative déployée dans laquelle le bord transversal arrière de l'élément de toit avant et le bord transversal avant de l'élément de toit central arrière viennent sensiblement en contact et une deuxième position relative repliée dans laquelle ils sont repliés l'un vers l'autre, l'élément central arrière du toit étant relié latéralement, de part et d'autre de sa direction longitudinale, à deux éléments latéraux arrière rigides de toit par des moyens de déplacement permettant à ces éléments latéraux arrière rigides de s'écarter d'une surface de contact de l'élément central arrière lors d'un mouvement du toit de sa première vers sa seconde position, caractérisé en ce qu'un bord avant de chacun des éléments latéraux de toit comprend des moyens de verrouillage qui coopèrent avec des moyens complémentaires mobiles disposés vers l'arrière de l'élément de toit avant, de sorte à verrouiller chaque élément latéral de toit avec l'élément de toit avant en rotation, autour d'un axe X sensiblement parallèle à la direction longitudinale de l'élément de toit avant lorsqu'il est dans sa première position et en translation suivant un axe Z qui appartient à un plan sensiblement vertical et est sensiblement perpendiculaire à l'axe X.

On conseille également, dans ce contexte, que le verrouillage autour de l'axe X précité comprenne avantageusement deux éléments coaxiaux de verrouillage disposés sensiblement parallèlement à l'axe Z et à distance l'un de l'autre.

Pour favoriser un système de manoeuvre et de verrouillage mécaniquement performant, relativement simple, fiable et allant dans le sens de la satisfaction d'une partie au moins des buts précédents, on conseille par ailleurs que l'élément de toit avant soit articulé sur des bras disposés de part et d'autre de l'axe longitudinal du véhicule, chacun des bras étant articulé sur le bâti structurel de ce véhicule, et comprenant des moyens de verrouillage qui coopèrent avec lesdits moyens complémentaires de verrouillage mobile de l'élément de toit avant, de manière à verrouiller chacun de ces bras sensiblement suivant l'axe Z.

A noter alors un avantage de simplicité : les moyens ou organes mobiles combinent plusieurs fonctions : positionnement, verrouillage et mise éventuelle sous contrainte des bras (réduction des mouvements de battement ou de vibration du toit). Les moyens mobiles bloquent en outre le parallélogramme déformable qui est typiquement formé par les articulations et le toit et est bien immobilisé tant dans ses positions fermée au dessus de l'habitacle qu'ouverte.

On conseille en outre que les moyens de verrouillage des éléments de toit latéraux, et avantageusement des bras lorsque le toit est installé sur le véhicule, comprennent des tiges qui s'étendent respectivement suivant l'axe Z et un axe Y perpendiculaire au plan vertical, les tiges venant se loger en position verrouillée entre des dents des moyens complémentaires mobiles.

Il s'agit là d'un mode de réalisation simple mécaniquement, facile à fabriquer et fiable (pièces pouvant être obtenues par pliage, découpe et soudage).

Dans ce contexte, on conseille d'ailleurs en outre que :
- lesdits moyens complémentaires mobiles comprennent quatre dents séparées deux à deux par des fentes qui définissent entre elles une croix, les fentes recevant les tiges en position verrouillée,
- et/ou que l'une des dents participe avantageusement au verrouillage en translation des éléments de toit latéraux en venant se loger dans une cavité définie à leur bord avant.

Pour, par ailleurs, favoriser un maintien optimisé du toit dans ses positions fermée et rangée, ouverte, en évitant, ou du moins limitant, les vibrations et les dommages pouvant lui être causé par certaines pièces annexes, on prévoit avantageusement :
- qu'une partie avant de l'élément de toit avant comprenne des moyens mobiles de verrouillage qui coopèrent avec des moyens fixes de verrouillage solidaires d'un élément du bâti structurel situé à proximité du pare-brise, de sorte que, dans la première position de l'élément de toit avant, une commande des moyens mobiles de verrouillage provoque un positionnement et un verrouillage des éléments de toit et des bras,
- voire que des moyens fixes de verrouillage agissant de façon identique auxdits moyens fixes de verrouillage qui opèrent dans la première position du toit, soient disposés sur des éléments du bâti structurel du véhicule à l'arrière de l'habitacle, de façon à positionner et verrouiller l'élément de toit avant dans la deuxième position du toit, par une commande desdits moyens mobiles de verrouillage,
- et/ou que lesdits moyens fixes de verrouillage agissant dans la seconde position du toit soient disposés selon une géométrie équivalente à celle des moyens de verrouillage agissant dans la première position du toit, pour que l'élément de toit avant soit verrouillé de façon identique dans les deux positions.

Une description encore plus détaillée de l'invention va maintenant être fournie en référence aux dessins d'accompagnement donnés à titre d'exemples et dans lesquels :
- la figure 1 est une vue partielle schématique en coupe longitudinale d'une partie d'un véhicule convertible montrant en trait plein l'essentiel d'un toit en position fermée, les mêmes parties du toit étant également présentées en position repliée ouverte (trait mixte),
- la figure 2 est une coupe, complétée par symétrie de l'autre côté de l'axe longitudinal 34 du véhicule, de l'élément de toit arrière, lorsque le toit est fermé, la coupe ayant été faite perpendiculairement à l'axe longitudinal 34 et permettant de constater que l'élément arrière de toit est en plusieurs parties,
- la figure 3 est une vue partielle en coupe parallèle à celle de la figure 2, plus à l'arrière, à proximité de l'axe transversal arrière d'articulation de l'élément latéral arrière de toit montré sur la figure 1,
- la figure 4 est une vue agrandie d'une partie du toit, alors qu'il est en position fermée et verrouillée, la vue ayant été faite parallèlement à l'axe longitudinal,
- la figure 5 est une vue dans le sens de la flèche V de la figure 4,
- la figure 6 est une vue en perspective de la cornière de verrouillage 49 de la figure 5,
- la figure 7 est une vue dans le sens de la flèche VII de la figure 5,
- la figure 8 est une vue de l'élément avant de toit 1 et de l'un des éléments latéraux arrière 2, lorsque le toit est ouvert, replié ici dans le coffre arrière du véhicule, la vue ayant été faite une nouvelle fois dans le sens de l'axe longitudinal 34,
- la figure 9 montre à nouveau en perspective, selon la même vue que la figure 6, une cornière 49 porteuse d'un croisillon fixe de réception de l'organe de verrouillage mobile arrière de l'élément de toit avant 1.
- et la figure 10 montre en vue schématique partielle de dessus essentiellement le toit en position fermée, à échelle réduite.

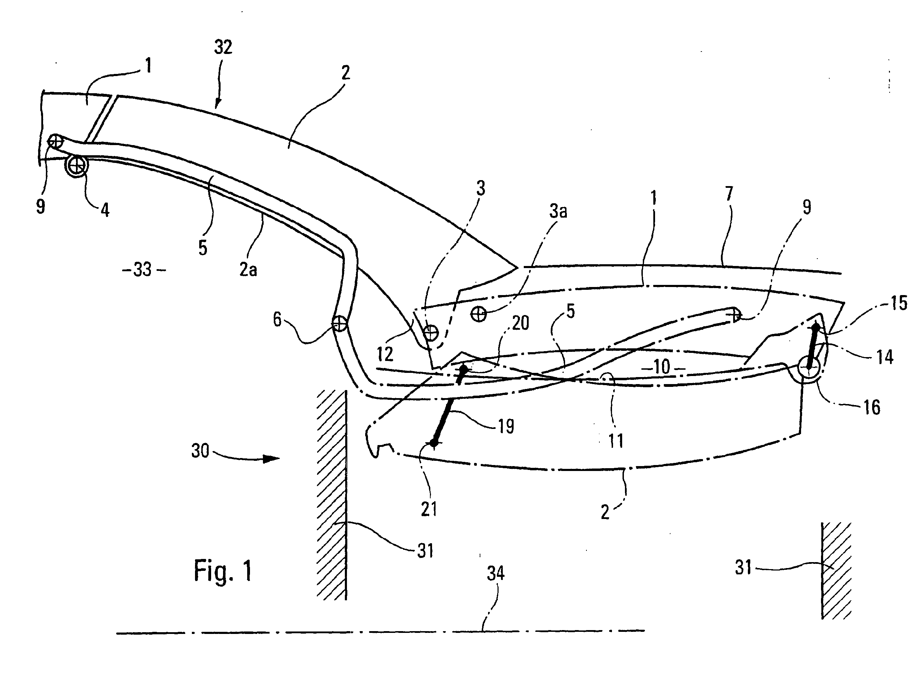

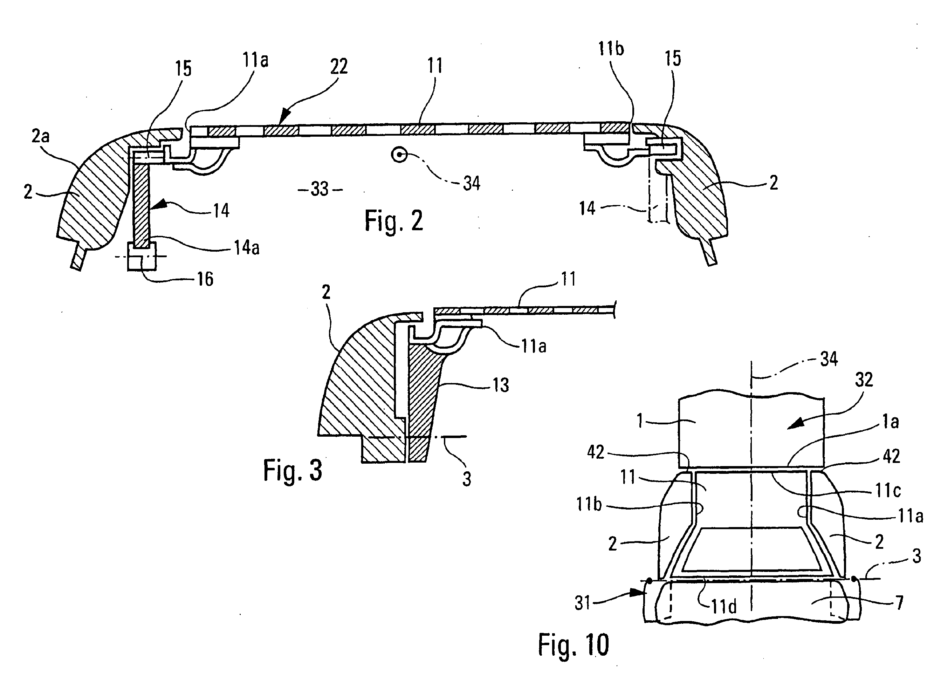

Sur les figures 1 et 2, en particulier, on voit un véhicule convertible 30, c'est à dire découvrable, comprenant un bâti structurel 31 appelé également châssis ou caisse et un toit 32 ici escamotable dans le coffre arrière 10 du véhicule.

Le toit mobile 32 comprend un élément avant rigide 1 relié de façon articulée à un élément central arrière rigide 11. Son extrémité arrière est reliée au châssis 31.

Les deux éléments de toit 1 et 11 sont mobiles entre une position relative déployée représentée en trait plein sur la figure 1 dans laquelle ils recouvrent l'habitacle 33 du véhicule et une position relative repliée (traits mixtes, figure 1) dans laquelle ces deux éléments sont ici repliés l'un sur l'autre à l'intérieur du coffre arrière 10 dans une position sensiblement parallèle au capot ou couvercle 7 de ce coffre.

De part et d'autre de l'élément central arrière rigide 11, par rapport à l'axe longitudinal 34 du véhicule, se trouvent deux autres éléments 2 rigides latéraux de toit (voir figure 2) reliés à l'élément central 11 par des moyens tels que lors du déplacement de l'élément central 11 vers sa position repliée, les éléments latéraux 2 puissent se dégager de la surface extérieure de l'élément central 11.

L'élément avant de toit 1 est relié vers son bord arrière et de façon articulée suivant l'axe horizontal transversal 4 à chaque élément latéral arrière 2 dont l'extrémité arrière est elle-même articulée parallèlement au châssis 31, en 3.

Le déplacement des éléments de toit 1, 2 entre leurs positions ouverte et fermée est commandé au moyen d'un bras 5 articulé au châssis en 6 et à l'élément avant autour de l'axe transversal 9.

Le pivotement du bras 5 est commandé par exemple par un moteur relié à l'axe 3.

Les articulations 4, 9, 6, 3 forment un parallélogramme déformable.

Pour plus de détails, on peut se reporter à FR-A-2 805 218, pages 3 à 6.

L'élément central arrière 11 est donc articulé au bâti 31 suivant un axe horizontal 3 perpendiculaire à l'axe longitudinal 34 du véhicule.

Les éléments latéraux 2 portent chacun à leur extrémité inférieure une patte fixe 12 dont l'extrémité est montée pivotante sur l'axe 3.

Le bord arrière de l'élément avant 1 porte latéralement, à son extrémité inférieure correspondante, un doigt 16 formant levier par rapport à l'axe horizontal 15 lors de la rotation de l'élément avant de toit 1 vis-à-vis de l'élément central arrière 11. Le doigt 16 est engagé dans une lumière des éléments 2 qui est allongée sensiblement dans la direction du bord inférieur 2a de l'élément latéral 2 concerné, ce doigt 16 agissant sur l'élément pour le faire pivoter autour de l'axe horizontal 3, lorsque le toit doit rentrer, ici vers le coffre, pour être ouvert.

Un axe horizontal 20 solidaire de l'élément central arrière 11 permet l'articulation d'une biellette 19 articulée à son autre extrémité (axe horizontal 21, figure 1) sur l'élément latéral arrière 2 correspondant (à gauche ou à droite de l'axe 24, compte tenu de la symétrie de réalisation prévue).

Les mouvements de rotation de l'élément central 1 autour de l'axe horizontal 3a et de l'élément avant 1 en 15 entraînent le déplacement des éléments latéraux 2 sensiblement parallèlement à eux-mêmes relativement à l'élément central 11.

Le bord arrière de l'élément de toit avant 1 porte latéralement, d'un côté et de l'autre, un levier 14 dont l'une des extrémités est articulée à l'élément avant 1 près du bord arrière et de la surface extérieure de celui-ci et dont l'autre extrémité est articulée à l'élément arrière 2, près du bord avant et de la surface intérieure de celui-ci.

L'autre extrémité 14a du levier 14 porte le doigt d'articulation 16 qui est donc engagé dans la lumière précitée allongée sensiblement dans la direction du bord inférieur 2a de l'élément arrière 2 pour guider le déplacement dudit doigt lors du pivotement de cet élément arrière 2 vers sa position ouverte repliée.

L'élément arrière 11 du toit peut ici être considéré comme une lunette arrière bordée latéralement (en position fermée du toit) par les deux éléments latéraux 2 qui forment alors une custode. La lunette arrière 11 peut occuper tout l'espace compris entre les deux éléments latéraux 2.

Le bord arrière 11d de la lunette arrière 11 porte latéralement de part et d'autre de l'axe 34, une patte fixe 13 dont l'extrémité est montée pivotante sur l'axe horizontal 3 (figure 3).

Ainsi, les moyens de déplacement, notamment 5 et 14, permettent aux éléments latéraux arrière 2 de s'écarter chacun de la surface de contact correspondante, repérée 11a ou 11b sur la figure 2 de l'élément central arrière 11, lors du mouvement du toit de sa position fermée vers sa position ouverte.

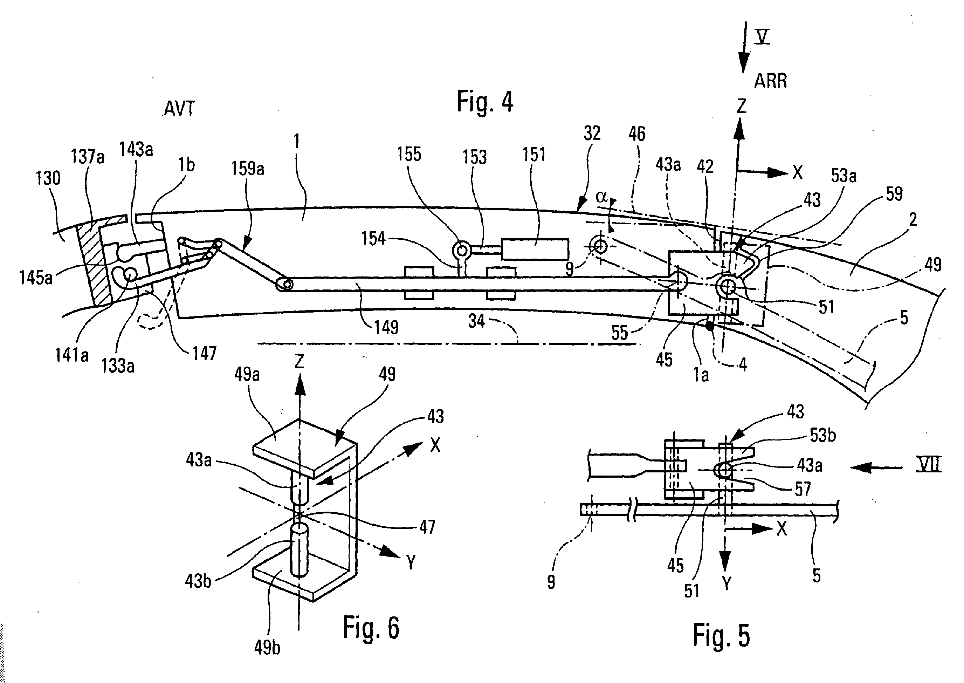

Comme illustré en particulier sur les figures 4 et 5, un bord avant 42 de chaque élément latéral de toit 2 (on imagine la symétrie par rapport à l'axe longitudinal médian 34 du véhicule à partir de la figure 4) comprend des moyens de verrouillage 43 qui coopèrent avec des moyens complémentaires mobiles 45 situés vers l'arrière (ARR) de l'élément de toit avant 1, afin de verrouiller chaque élément latéral 2 de toit avec l'élément de toit avant 1, ceci en rotation autour d'un axe X lorsque l'élément de toit 1 est dans sa position fermée de la figure 4 et en translation suivant un axe Z qui appartient à un plan sensiblement vertical et est sensiblement perpendiculaire à X.

On notera que l'axe X est sensiblement parallèle à la direction longitudinale 46 de l'élément de toit 1 à l'endroit de son bord transversal arrière 1a, l'inclinaison par rapport à l'horizontale (et donc à l'axe longitudinal 34 du véhicule) étant fonction de la courbure de l'élément de toit 1 à l'endroit de sa liaison avec l'élément arrière 2, dans cette position fermée du toit. Dans l'exemple, la direction longitudinale 46 constitue également celle de l'élément de toit central arrière 11, compte-tenu de la ligne de raccordement entre les éléments 1 et 11 de toit.

Ainsi, on comprendra que la direction de l'axe Z est globalement perpendiculaire à l'axe X et que cet axe Z appartient à un plan "sensiblement" vertical, compte-tenu des formes actuellement données aux cabriolets. Toutefois, l'angle α de la figure 4 pourrait être beaucoup plus marqué, tout en pouvant bien entendu être nul.

Pour assurer ce verrouillage autour de l'axe X, le système de verrouillage 43 comprend deux doigts de verrouillage 43a, 43b coaxiaux (voir la figure 6 pour plus de détail) s'étendant parallèlement à l'axe Z et espacés l'un de l'autre suivant cette direction, en laissant entre eux un espace intermédiaire 47.

Les deux bouts d'arbres coaxiaux 43a, 43b sont portés par un organe support 49, ici une cornière en U fixée à l'intérieur de chaque élément latéral de toit arrière 2, de part et d'autre de l'axe longitudinal, avec l'ouverture du U dirigée vers l'avant (AVT) et les deux branches 49a, 49b, respectivement supérieure et inférieure, disposées ici parallèlement à, ou suivant, la direction Z, bien qu'un angle non nul pourrait exister si la rupture de pente entre les éléments 1 et 2 était plus marquée que dans l'exemple illustré.

Pour le verrouillage et le positionnement du toit (en particulier l'élément de toit avant 1) dans sa position fermée de la figure 4, on va ici utiliser les bras latéraux 5 articulés donc en 6 (voir figure 1) vis-à-vis du bâti structurel 31 du véhicule.

Chaque bras 5 (on imagine la réalisation toujours par symétrie de l'autre côté de l'axe longitudinal médian 34), comprend un organe de verrouillage 51 qui coopère donc avec l'organe de verrouillage 45 mobile de l'élément de toit avant 1, de sorte à verrouiller chacun desdits bras 5, suivant l'axe Z, comme on le voit sur les figures 4 (partiellement) et 5.

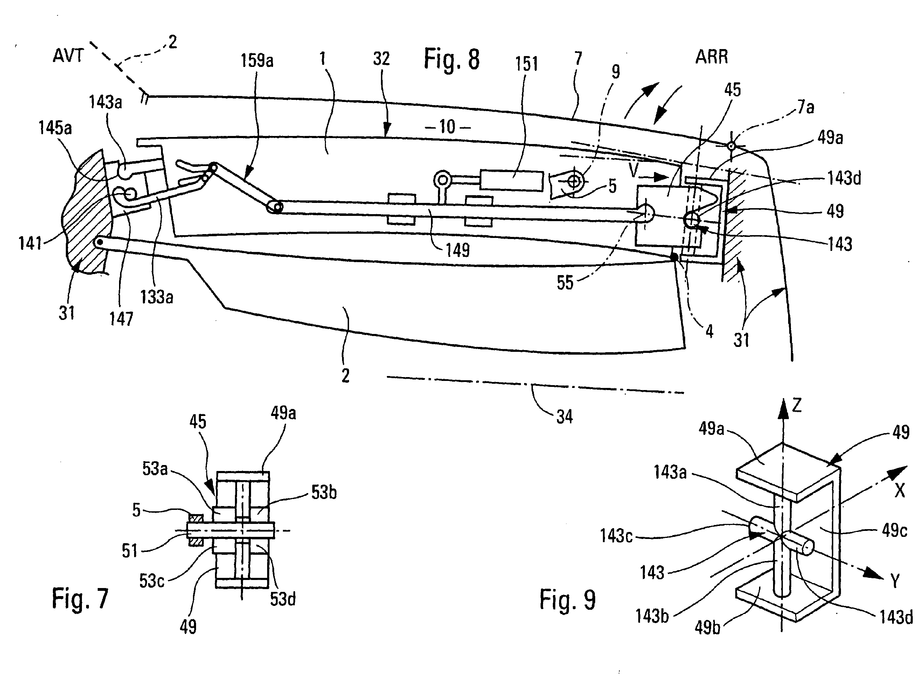

Dans le mode de réalisation préféré, illustré ici, les organes de verrouillage tant des éléments de toit latéraux 2 (barreaux précités 43a, 43b) que des bras latéraux 5 (organes 27) sont des tiges qui s'étendent respectivement suivant l'axe Z et un axe horizontal Y (voir figure 5) perpendiculaire aux axes précités X et Z, lesdites tiges 43a, 43b et 51 venant se loger en position verrouillée des figures 4 et 5 entre des dents (voir partiellement sur les figures 4 et 5 et plus en détail sur la figure 7) 53a, 53b, 53c, 53d de l'organe complémentaire mobile 45.

Concernant cet organe complémentaire mobile 45, on constate sur la figure 4 qu'il est relié par une articulation horizontale 55 à un bras allongé 149 s'étendant à l'intérieur de l'élément avant du toit 1.

Les deux barres 149, de part et d'autre de l'axe 34, commandées en translation suivant globalement la direction longitudinale de l'élément de toit 1, par au moins un actionneur 151 (moteur ou groupe électrico-hydraulique) dont l'arbre de sortie 153 sont chacune déplacées par une tige 154, via un renvoi d'angle 155, sous la commande de l'arbre de sortie 153 de l'actionneur 151.

A l'avant, le verrouillage de l'élément de toit 1 est assuré par crochetage.

On voit en effet sur la figure 4 que, perpendiculairement à son bord transversal avant 1b, l'élément avant de toit 1 présente un crochet de verrouillage 133a.

Cet organe mobile, engage, dans la position verrouillée de la figure 4, un organe complémentaire fixe 141a s'étendant horizontalement et fixé à un bloc 147 appartenant à un élément rigide du bâti structurel proche du pare-brise 130.

En l'espèce, l'élément porteur 137a est une traverse transversale supérieure de baie de pare-brise.

L'organe 141a peut consister en un arceau et définit de toute façon une gâche pour le crochet de verrouillage mobile 133a.

Pour son positionnement à l'avant, l'élément de toit 1 comprend en outre des organes d'appui et/ou de centrage qui consistent ici en des barreaux 143a terminés par des boules de centrage venant reposer sur des berceaux tels que 145a.

Chaque berceau est ici réalisé dans la surface supérieure d'un bloc 147, à un niveau d'élévation situé au-dessus du niveau du crochet 133a correspondant.

Ainsi, à l'endroit de son bord avant 1b, l'élément de toit 1 sera, en position verrouillée fermée de la figure 4, retenue vers le haut par les crochets 133a et, vers le bas, par l'appui des moyens d'appui/centrage 143a reposant sur leur berceau de réception.

Comme on l'aura noté sur la figure 4, la manoeuvre des crochets 133a s'effectue par l'intermédiaire d'un système de levier tel que 159a articulé sur le bras 149 correspondant.

Avantageusement, le verrouillage à l'avant, via les crochets 133a et à l'arrière, via les moyens de verrouillage 43 et les organes mobiles 45, s'effectue de façon coordonnée, et de préférence concomitamment.

Revenant sur la figure 7, on constate qu'avantageusement chacun des organes mobiles 45 complémentaires de la croix formée par les tiges réunies 43a, 43b, 51 comportent donc quatre dents 53a, ...53d séparées deux à deux par des fentes, telles que 57 pour l'une d'entre elle sur la figure 5 et qui forment entre elles une croix.

Ces fentes reçoivent bien sûr les tiges 43a, 43b et 51, suivant donc les deux directions Z et Y en position verrouillée.

On notera encore que la dent 53a qui s'étend suivant donc un axe longitudinal (voir figure 4) participe en outre au verrouillage en translation suivant l'axe Z, de l'élément de toit latéral 2 concerné, en venant se loger dans une cavité 59 pratiquée vers l'extrémité avant de cet élément 2, à proximité donc de son bord transversal 42.

Avec un tel système de verrouillage, il va être possible, dans la position fermée de l'élément de toit avant 1, d'assurer une commande de l'ensemble des organes de verrouillage mobile, tant à l'avant qu'à l'arrière de cet élément de toit 1, telle que cette commande provoque le positionnement et le verrouillage des éléments de toit 1 et 2 et des bras latéraux 5.

Pour le verrouillage en position ouverte, repliée du toit 32 comme sur la figure 8, où le toit est donc rangé dans le coffre arrière 10, on retrouve des organes de verrouillage fixes assurant des conditions de verrouillage identiques à celles en position fermée, de façon une nouvelle fois à pouvoir avantageusement assurer un positionnement et un verrouillage de l'élément de toit avant 1 grâce à une commande de l'ensemble des organes de verrouillage mobiles avant 133a et arrière 45.

On notera en outre en comparant les figures 1 et 8, que les organes fixes complémentaires de verrouillage liés au bâti structurel 31 et sur lesquels viennent donc se prendre les éléments mobiles 133a et 45 sont disposés selon une géométrie équivalente à celle des organes de verrouillage fixes qui reçoivent les mêmes éléments mobiles lorsque le toit est fermé.

Ainsi, on retrouve, à l'avant, face à chaque crochet 133a et pion de centrage/appui 143a, la gâche 141a et le berceau 145a du bloc 147, lequel est rigidement lié à un élément en regard du bâti 31.

A l'arrière, et sensiblement suivant un axe parallèle à l'axe longitudinal 34, on retrouve une nouvelle fois une cornière 49, avec ses deux retours supérieur 49a et inférieur 49b, ici disposées sensiblement horizontalement.

Par son tronçon de liaison 49c, la cornière 49 est fixée à un élément du bâti 31 (voir figure 8) vers l'avant, donc face à l'organe mobile correspondant 45, chaque cornière 49 présente une croix fixe de verrouillage 143.

Les deux branches verticales 143a, 143b de la croix 143 s'étendent ainsi suivant une direction parallèle à l'axe Z et sont fixées à leur extrémité respectivement haute et basse aux branches 49a et 49b, respectivement.

Perpendiculairement, suivant une direction parallèle à l'axe Y, donc sensiblement horizontalement et perpendiculairement à la direction longitudinale 34 du véhicule, les deux branches transversales 143c 143d de la croix 143 s'interrompent sensiblement au droit des bords latéraux du tronçon central 49c de la cornière 49.

Ainsi, une fois positionné sensiblement dans la même orientation que lorsqu'il est fermé, l'élément avant de toit 1 va être amené, en particulier par ses bras latéraux 5, jusque dans sa position repliée de la figure 8 chaque/l'actionneur 151 ayant placé les organes mobiles 133a et 45 dans leur état escamoté pour laisser le toit s'engager entre les éléments fixes 147 et 49, à l'avant et à l'arrière.

Une fois les organes d'appui avant 143a de l'élément 1 en appui sur leur berceau récepteur 145a, les actionneurs 151 vont déployer longitudinalement les moyens de verrouillage mobiles de l'élément 1, de manière à réaliser le crochetage avant par les moyens de verrouillage 133a et le verrouillage arrière par la translation axiale de l'organe 45 dont les dents vont s'engager dans les quatre espaces laissés libres entre les barreaux de la croix fixe 143 (flèche V de la figure 8).

Le déverrouillage s'opérera de façon inverse.

Une fois le toit 32 ainsi replié dans le coffre 10, le capot 7 pourra être refermé, par rotation autour de son axe arrière transversal 7a bien entendu placé de manière à laisser au toit une place suffisante pour pouvoir entrer et sortir du coffre, même si d'autres véhicules qu'un véhicule à coffre arrière peuvent être concernés par l'invention.

Sur la figure 10, on constate qu'en position fermée du toit 32, l'élément de toit arrière central 11 vient en contact, par son bord transversal avant 11c avec le bord transversal arrière 1a de l'élément de toit avant 1; de même pour le bord transversal 42 de chaque élément de toit latéral arrière 2. On constate également que l'élément de toit central arrière 11 est articulé sur le bâti 31, vers son extrémité arrière 11d, autour de l'axe transversal horizontal 3.

Pour le verrouillage entre les éléments 1 et 2 en position fermée, on notera que la cornière 49 avec ses doigts de verrouillage 43a, 43b de la figure 6, pourrait être remplacée par la cornière avec la croix fixe 143 de la figure 9, la branche latérale 143d étant raccourcie ou supprimée pour laisser se loger la tige transversale 51 entre les dents de l'organe 45.

Ci-avant, chaque crochet 133a présente une ouverture tournée vers le haut. Toutes les orientations pour les ouvertures sont toutefois possibles, pourvu qu'elles soient tournées vers les moyens de centrage et/ou d'appui 143a, pour un blocage vers le haut et vers le bas (ou inversement) de l'élément 1, respectivement, dans la position fermée verrouillée de la figure 4. Un blocage de l'élément 1 avantageusement légèrement sous tension, longitudinalement, est alors également conseillé.

Le verrouillage et l'appui/le centrage du toit présenté ci-avant étant typiquement dédoublé de part et d'autre de l'axe longitudinal médian 34, les commandes et mécanisme de verrouillage pourraient être séparées de part et d'autre de cet axe (plusieurs actionneurs 151, tiges 149...). On pourra également envisager d'autres types de dispositifs de commande comme par exemple des dispositifs à câbles de traction/poussée.

Pour le toit replié, des positions inclinées par rapport à l'horizontale, voire verticales, sont évidemment possibles grâce à un positionnement adéquat des moyens complémentaires de verrouillage.

## Revendications

1. Véhicule convertible présentant un axe longitudinal, un avant, un arrière et comprenant :
- un habitacle (33),
- un bâti structurel (31),
- un toit repliable (32) comportant un élément avant rigide (1) relié de façon articulé à un élément central arrière rigide (11) présentant une extrémité arrière (11c) vers laquelle il est relié de façon articulé au bâti structurel (31), lesdits éléments avant et central arrière de toit présentant une direction longitudinale (46) et chacun un bord transversal avant (1b, 11c) et un bord transversal arrière (1a, 11d) qui sont longitudinalement opposés, lesdits éléments de toit avant et central arrière étant mobiles entre une première position relative déployée dans laquelle le bord transversal arrière (1a) de l'élément de toit avant (1) et le bord transversal avant (11b) de l'élément de toit central arrière (11) viennent sensiblement en contact, lesdits éléments de toit recouvrant alors au moins en partie l'habitacle, et une deuxième position relative repliée dans laquelle ils sont repliés l'un vers l'autre, en découvrant alors une partie au moins de l'habitacle, l'élément central arrière du toit étant relié latéralement, de part et d'autre de sa direction longitudinale, à deux éléments latéraux arrière rigides de toit (2) qui s'écartent d'une surface de contact (11a, 11b) de l'élément central arrière lors d'un mouvement du toit de sa première vers sa seconde position, **caractérisé en ce qu'**un bord avant (42) de chacun des éléments latéraux (2) de toit comprend des moyens de verrouillage (43 ; 43a, 43b) qui coopèrent avec des moyens complémentaires mobiles (45) disposés vers l'arrière de l'élément de toit avant, de sorte à verrouiller chaque élément latéral de toit avec l'élément de toit avant, en rotation autour d'un axe X sensiblement parallèle à la direction longitudinale de l'élément de toit avant lorsqu'il est dans sa première position et en translation suivant un axe Z qui appartient à un plan sensiblement vertical et est sensiblement perpendiculaire à l'axe X.

2. Véhicule selon la revendication 1, **caractérisé en ce que** le verrouillage autour de l'axe X comprend deux ensembles (43a, 43b) de verrouillage disposés sensiblement le long de l'axe Z et à distance l'un de l'autre.

3. Véhicule selon l'une des revendications 1 ou 2, **caractérisé en ce que** l'élément de toit avant (1) est articulé sur des bras (5) disposés de part et d'autre de l'axe longitudinal (34) du véhicule, chacun des bras étant articulés (6) sur le bâti structurel (31) de ce véhicule, chacun desdits bras comprend des moyens de verrouillage (51) qui coopèrent avec lesdits moyens complémentaires de verrouillage mobiles (45) de l'élément de toit avant (1), de manière à verrouiller chacun des bras sensiblement suivant l'axe Z.

4. Véhicule selon la revendication 3, **caractérisé en ce que** les moyens de verrouillage des éléments de toit latéraux (2) et des bras (5) comprennent des tiges (43a, 43b ; 51) qui s'étendent respectivement suivant l'axe Z et un axe Y sensiblement perpendiculaire au plan vertical, les tiges venant se loger en position verrouillée entre des dents des moyens complémentaires mobiles (53a, 53b, 53c, 53d).

5. Véhicule selon l'une des revendications 1 à 4, **caractérisé en ce que** lesdits moyens complémentaires mobiles comprennent quatre dents (53a, 53b, 53c, 53d) séparées deux à deux par des fentes (57) qui définissent entre elles une croix, les fentes recevant les tiges en position verrouillée.

6. Véhicule selon la revendication 4 ou 5, **caractérisé en ce que** l'une des dents (53a) participe au verrouillage en translation des éléments de toit latéraux (2) suivant l'axe Z, en venant se loger dans une cavité (59) définie à leur bord avant (42).

7. Véhicule selon la revendication 3 ou l'une des revendications 4 à 6 s'y rattachant, **caractérisé en ce qu'**une partie avant (1b) de l'élément de toit avant (1) comprend des moyens mobiles (133a) de verrouillage qui coopèrent avec des moyens fixes de verrouillage (141a) solidaires d'un élément (137a) du bâti structurel (31) situé à proximité du pare-brise, de sorte que, dans la première position de l'élément de toit avant, une commande des moyens mobiles de verrouillage provoque un positionnement et un verrouillage des éléments de toit et des bras (5).

8. Véhicule selon la revendication 7 **caractérisé en ce que** des moyens fixes de verrouillage (141a, 143) agissant de façon identique aux dits moyens fixes de verrouillage (141a, 43, 51) qui opèrent dans la première position du toit, sont disposés sur des éléments du bâti structurel (31) du véhicule à l'arrière de l'habitacle, de façon à positionner et verrouiller l'élément de toit avant (1) dans la deuxième position du toit, par une commande desdits moyens mobiles de verrouillage (133a, 45).

9. Véhicule selon la revendication 7 **caractérisé en ce que** lesdits moyens fixes de verrouillage (141a, 143) agissant dans la seconde position du toit sont disposés selon une géométrie équivalente à celle des moyens fixes de verrouillage (141a, 43, 51) agissant dans la première position du toit, pour que les conditions de verrouillage de l'élément de toit avant (1) soient identiques dans les deux positions.

## Claims

1. A convertible vehicle having a longitudinal axis, a front and a rear, and comprising:
- a passenger compartment (33),
- a structural frame (31),
- a folding roof (32) comprising a rigid front element (1) articulated to a rigid rear central element (11) having a rear end (11c) towards which it is articulated to the structural frame (31), said front and said rear central roof elements having a longitudinal direction (46) and each having a transverse front edge (1b, 11c) and a transverse rear edge (1a, 11d) which are longitudinally opposed, said front and said rear central roof elements being movable between a first relative deployed position in which the transverse rear edge (1a) of the front roof element (1) and the transverse front edge (11b) of the rear central roof element (11) substantially come into contact, said roof elements thus at least partly covering the passenger compartment, and a second relative folded position in which they are folded towards one another, thus uncovering at least a part of the passenger compartment, the rear central element of the roof being laterally attached, on either side of its longitudinal direction, to two rigid rear lateral roof elements (2) which move away from a contact surface (11a, 11b) of the rear central element when the roof moves from its first into its second position, **characterized in that** a front edge (42) of each of the lateral roof elements (2) has locking means (43; 43a, 43b), which cooperate with complementary movable means (45) disposed towards the rear of the front roof element, so as to lock each lateral roof element to the front roof element, in rotation about an X axis substantially parallel to the longitudinal direction of the front roof element when it is in its first position and in translation along a Z axis which lies on a substantially vertical plane and is substantially perpendicular to the X axis.

2. A vehicle according to Claim 1, **characterized in that** the locking mechanism about the X axis comprises two locking assemblies (43a, 43b) disposed substantially along the Z axis and at a distance from one another.

3. A vehicle according to one of Claims 1 or 2, **characterized in that** the front roof element (1) is articulated to arms (5) disposed on either side of the longitudinal axis (34) of the vehicle, each of the arms being articulated (6) to the structural frame (31) of said vehicle, and each of said arms including locking means (51) which cooperate with said complementary movable locking means (45) of the front roof element (1) so as to lock each of the arms substantially along the Z axis.

4. A vehicle according to Claim 3, **characterized in that** the locking means of the lateral roof elements (2) and arms (5) comprise rods (43a, 43b; 51) which extend respectively along the Z axis and a Y axis which is substantially perpendicular to the vertical plane, the rods coming to rest in the locked position between teeth of the complementary movable means (53a, 53b, 53c, 53d).

5. A vehicle according to one of Claims 1 to 4, **characterized in that** said complementary movable means comprise four teeth (53a, 53b, 53c, 53d) separated in pairs by slots (57) which together define a cross, the slots receiving the rods in the locked position.

6. A vehicle according to Claim 4 or 5, **characterized in that** one of the teeth (53a) is involved in the locking in translation of the lateral roof elements (2) along the Z axis, by coming to rest in a recess (59) formed at the respective front edge (42).

7. A vehicle according to Claim 3 or one of the related Claims 4 to 6, **characterised in that** a front portion (1b) of the front roof element (1) includes movable locking means (133a) which cooperate with fixed locking means (141a) firmly attached to an element (137a) of the structural frame (31) located close to the windscreen, in such a way that, in the first position of the front roof element, a control of the movable locking means results in positioning and locking of the roof elements and arms (5).

8. A vehicle according to Claim 7, **characterized in that** fixed locking means (141a, 143) acting in an identical way to said fixed locking means (141a, 43, 51) which operate in the first position of the roof, are disposed on elements of the structural frame (31) of the vehicle at the rear of the passenger compartment in such a way as to position and lock the front roof element (1) in the second position of the roof, by a control of said movable locking means (133a, 45).

9. A vehicle according to Claim 7, **characterized in that** said fixed locking means (141a, 143) acting in the second position of the roof are disposed according to a geometry equivalent to that of the fixed locking means (141a, 43, 51) acting in the first position of the roof, so that the locking conditions of the front roof element (1) are identical in the two positions.

## Patentansprüche

1. Konvertibles Fahrzeug mit einer Längsachse, einer Vorderseite, einer Rückseite und mit:
- einer Fahrgastzelle (33),
- einem Fahrzeugrahmen (31),
- einem aufdeckbaren Dach (32), mit einem steifen vorderen Element (1), das mit einem steifen hinteren zentralen Element (11) gelenkig verbunden ist, welches ein hinteres Ende (11c) aufweist in dessen Richtung dieses gelenkig mit dem Fahrzeugrahmen (31) verbunden ist, wobei das vordere und hintere zentrale Element des Dachs aufweisen eine Längsrichtung (46) und jeweils eine Querkante (1b, 11c) und eine hintere Querkante (1a, 11d), die einander in Längsrichtung entgegengesetzt sind, wobei das vordere und hintere zentrale Dachelement beweglich sind zwischen einer relativ entfalteten ersten Position, in welcher die hintere Querkante (1a) des vorderen Dachelements (1) und die vordere Querkante (11b) des hinteren zentralen Dachelements (11) im Wesentlichen in Kontakt kommen, wobei die Dachelemente die Fahrgastzelle dann wenigstens teilweise abdecken, und einer relativ aufgedeckten zweiten Position, in welcher diese zueinander zurückbewegt sind und dann wenigstens einen Teil der Fahrgastzelle freimachen, wobei das hintere zentrale Element des Dachs seitlich, beiderseits seiner Längsrichtung mit zwei steifen hinteren Seitenelementen des Dachs (2) verbunden ist, die sich bei einer Bewegung des Dachs aus seiner ersten in seine zweite Position von einer Kontaktfläche (11a, 11b) des hinteren zentralen Elements erstrecken, **dadurch gekennzeichnet, dass** eine Vorderkante (42) jedes der Seitenelemente (2) des Dachs Verriegelungsmittel (43; 43a, 43b) aufweist, die mit beweglichen komplementären Mitteln (45) zusammenwirken, die zur Hinterseite des vorderen Dachelements hin angeordnet sind, um so jedes seitliche Dachelement mit dem vorderen Dachelement zu verriegeln, und zwar um eine zur Längsrichtung des vorderen Dachelements im Wesentlichen parallelen Achse X, wenn sich dieses in seiner ersten Position befindet, und unter Translation entlang einer Achse Z, die zu einer im Wesentlichen vertikalen Ebene gehört und im Wesentlichen senkrecht zur Achse X ist.

2. Fahrzeug nach Anspruch 1, **dadurch gekennzeichnet, dass** die Verriegelung um die Achse X zwei Verriegelungseinheiten (43a, 43b) umfasst, die im Wesentlichen entlang der Achse Z und in Abstand zueinander angeordnet sind.

3. Fahrzeug nach einem der Ansprüche 1 oder 2, **dadurch gekennzeichnet, dass** das vordere Dachelement (1) über Arme (5), die beiderseits der Längsachse (34) des Fahrzeugs angeordnet sind, angelenkt ist, wobei jeder der Arme an dem Fahrzeugrahmen (31) des Fahrzeugs angelenkt (6) ist, jeder Arm des Verriegelungsmittels (51), das mit den komplementären beweglichen Verriegelungsmitteln (45) des vorderen Dachelements (1) zusammenwirkt, derart, dass jeder der Arme im Wesentlichen in Richtung der Achse Z verriegelt ist.

4. Fahrzeug nach Anspruch 3, **dadurch gekennzeichnet, dass** das Verriegelungsmittel der seitlichen Dachelemente (2) und die Arme (5) Stifte (43a, 43b; 51) umfassen, die sich jeweils in Richtung der Achse Z und einer Achse Y erstrecken, die im Wesentlichen senkrecht zu der vertikalen Ebene ist, wobei sich die Stifte in der verriegelten Position zwischen Zähne beweglicher komplementärer Mittel (53a, 53b, 53c, 53d) legen.

5. Fahrzeug nach einem der Ansprüche 1 bis 4, **dadurch gekennzeichnet, dass** die beweglichen komplementären Mittel vier Zähne (53a, 53b, 53c, 53d) aufweisen, die paarweise durch Schlitze (57) getrennt sind, welche untereinander ein Kreuz bilden, wobei die Schlitze die Stifte in der Verriegelten Position aufnehmen.

6. Fahrzeug nach Anspruch 4 oder 5, **dadurch gekennzeichnet, dass** einer der Zähne (53a) an der Verriegelung durch Translation der seitlichen Dachelemente (2) in Richtung der Achse Z partizipiert, indem sich dieser in einen Hohlraum (59) legt, der an ihrer Vorderkante (42) gebildet ist.

7. Fahrzeug nach Anspruch 3 oder einem der Ansprüche 4 bis 6, soweit darauf zurückbezogen, **dadurch gekennzeichnet, dass** ein vorderer Teil (1b) des vorderen Dachelements (1) bewegliche Verriegelungsmittel (133a) aufweist, die mit festen Verriegelungsmitteln (141a) zusammenwirken, die mit einem Element (137a) des Fahrzeugrahmens (31) verbunden sind, der in der Nähe der Windschutzscheibe liegt, derart, dass in der ersten Position des vorderen Dachelements ein Befehl des beweglichen Verriegelungsmittels eine Positionierung und eine Verriegelung der Dachelemente und der Arme (5) herbeiführt.

8. Fahrzeug nach Anspruch 7, **dadurch gekennzeichnet, dass** die festen Verriegelungsmittel (141a, 143), die in identischer Weise auf die festen Verriegelungsinittel (141a, 43, 51), die in der ersten Dachposition betriebsfähig sind, wirken, auf den Elementen des Fahrzeugrahmens (31) des Fahrzeugs an der Hinterseite der Fahrgastzelle angeordnet sind, derart, dass das vordere Dachelement (1) in der zweiten Dachposition durch einen Befehl der beweglichen Verriegelungsmittel (133a, 45) positioniert und verriegelt wird.

9. Fahrzeug nach Anspruch 7, **dadurch gekennzeichnet, dass** die festen Verriegelungsmittel (141a, 143), die in der zweiten Dachposition wirken, gemäß einer äquivalenten Geometrie wie derjenigen der festen Verriegelungsmittel (141a, 43, 51) angeordnet sind, die in der ersten Dachposition wirken, damit die Verriegelungsbedingungen des vorderen Dachelements (1) in den beiden Positionen identisch sind.
